# EUROPEAN PATENT APPLICATION

(11) **EP 1 641 280 A2**
(43) Date of publication of application: **29.03.2006**
(21) Application number: 05254493.9
(22) Date of filing: 20.07.2005
(51) Int. Cl.: H04N 7/26

(54) **Method and apparatus for decoding moving picture to which post filtering is applied**

(30) Priority: 29.07.2004 KR 2004059740
(71) Applicant: Samsung Electronics Co., Ltd., Yeongtong-gu Suwon-city, Gyeonggi-do 442-742 (KR)
(72) Inventor: Yoo, Ki-won, Songpa-gu Seoul (KR); Park, Eun-kyoung, Seongdong-gu Seoul (KR)
(74) Representative: Waddington, Richard

(57) **Abstract**

Provided is a moving picture decoding method and apparatus. The decoding method includes storing coding information on a certain block and neighboring blocks, deriving a filtering coefficient to filter a boundary between blocks and predicting a motion vector of a certain block, based on the stored information, and filtering the boundary between the certain block and the neighboring blocks based on the derived filtering coefficient. Accordingly, the number of the memories and the amount of routing resources needed are reduced.

## Description

Embodiments of the present invention relate to a method of and an apparatus for decoding a moving picture and, more particularly, to a method of and an apparatus for decoding a moving picture to which post filtering is to be applied.

H.264 is a new video compression standard that can provide a remarkably increased compression ratio compared with a conventional standard. H.264 is also called MPEG-4 AVC (advanced video coding). Digital TVs, PDAs, web pads, mobile phones, and the like can decode H.264 to play moving pictures according to the H.264 standard.

A decoder that decodes according to the H.264 standard includes a motion vector prediction unit and a filtering unit. The motion vector prediction unit predicts a motion vector of a current block. The filtering unit filters a boundary of the current block to make the boundaries between the current block and neighboring blocks less distinct. Such filtering is called deblocking filtering in the H.264 standard.

The filtering unit derives a boundary strength (BS), which is a filtering coefficient used for deblocking filtering and determines a filtering process suitable for the characteristics of the current block. The filtering unit derives the BS using information such as the type of coding used to encode a macroblock, a quantization parameter, and the neighboring macroblocks. The filtering unit filters the boundary of the current block according to the derived BS.

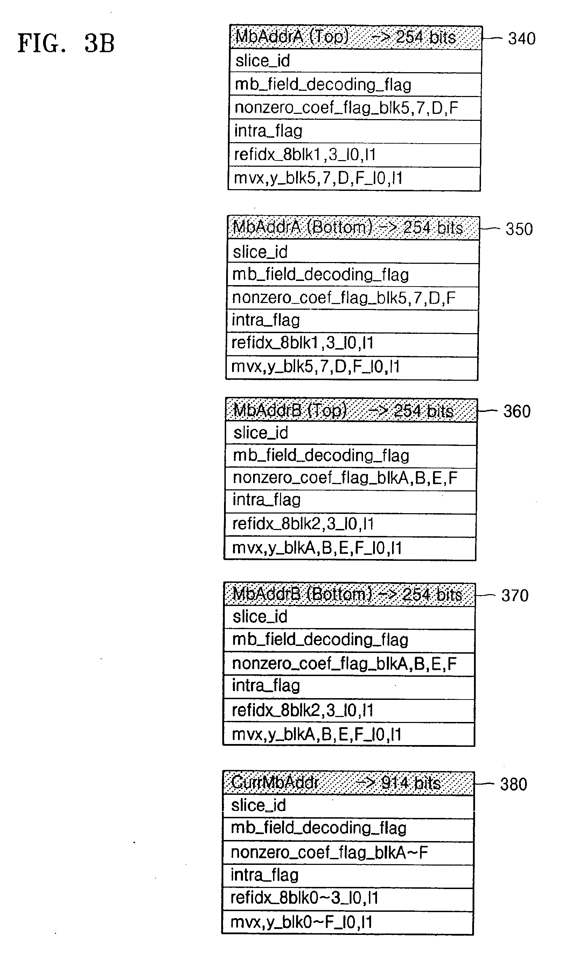

The items of information used to derive the BS are identical to the items of information that the motion vector prediction unit uses to predict a motion vector (except for an item of information referred to as 'nonzero_coef_flag' (FIG. 3B)).

According to a first conventional decoding method, the motion vector prediction unit and the filtering unit each have a memory. The motion vector prediction unit predicts the motion vector using information stored in its own memory, and the filtering unit derives BS using information stored in its own memory. However, two pieces of information included in the memories of the motion vector prediction unit and the filtering unit are the same.

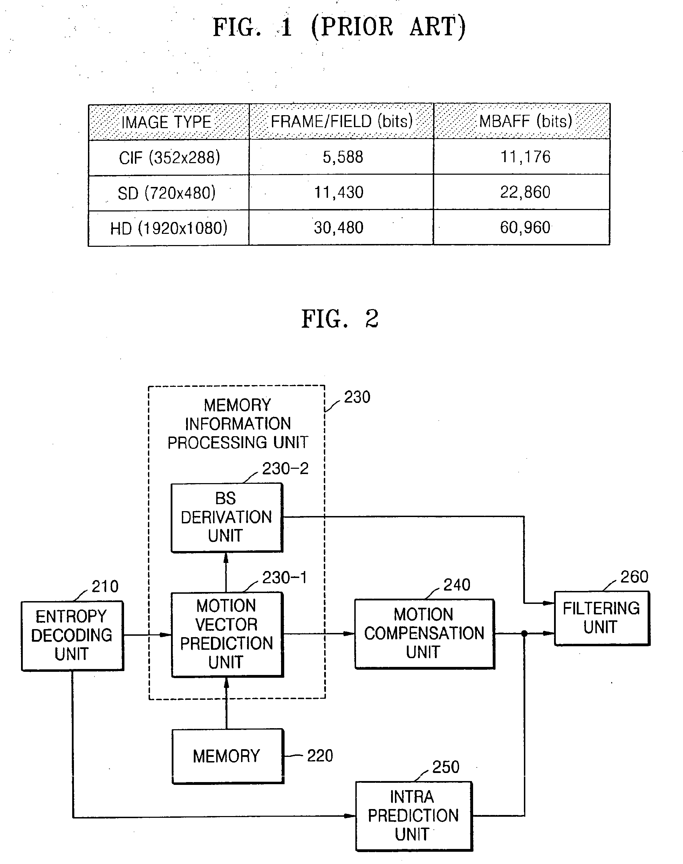

FIG. 1 is an exemplary diagram showing sizes of general internal memories used for deriving the BS. Referring to FIG. 1, in a frame/field, common intermediate format (CIF) requires a memory for storing 5,588 bits, standard definition (SD) requires a memory for storing 11,430 bits and high density (HD) requires a memory for storing 30,480 bits. In macroblock-adaptive frame-field coding (MBAFF), memories that can store twice as much information are required. The MBAFF coding processes information on pairs of coupled upper and lower blocks on a pair-by-pair basis.

According to the first conventional decoding method, although the information stored in the memory of the filtering unit is identical to the information stored in the memory of the motion vector prediction unit, two memories having a size as shown in FIG. 1 are used. In other words, data having a large size as shown in FIG. 1 is redundantly stored in two memories (the motion vector prediction unit memory and the filtering unit memory).

According to a second conventional decoding method, the memory of the filtering unit is removed. Instead, the motion vector prediction unit sends the information stored in its own memory to the filtering unit. In particular, the motion vector prediction unit sends information necessary for deriving a BS of the current block to the filtering unit. The filtering unit derives the BS using the received information and performs filtering.

In a second conventional decoding method, the maximum size of data sent from the motion vector prediction unit to the filtering unit is 1,930 bits. Such a large amount of data requires a lot of hardware routing resources. Further, a register for storing data to be transmitted is required when a macroblock pipeline structure is used.

As described above, identical data are redundantly stored in two memories according to the first conventional decoding method, and a lot of routing resources as well as a register are required according to the second conventional decoding method.

The present invention provides a moving picture decoding method to reduce the number of memories and the size of transport data by deriving a filtering coefficient from information used to predict a motion vector.

The present invention also provides a moving picture decoding apparatus to reduce the number of memories and the size of transport data by sharing a memory between a motion vector prediction unit and a filtering coefficient derivation unit.

According to the present invention there is provided an apparatus and method as set forth in the appended claims. Preferred features of the invention will be apparent from the dependent claims, and the description which follows.

According to an aspect of the present invention, there is provided a method of decoding a moving picture. The method involves storing coding information on a certain block and neighboring blocks, deriving a filtering coefficient to filter a boundary between the certain block and the neighboring blocks, predicting a motion vector of the certain block, based on the stored coding information, and filtering the boundary between the certain block and the neighboring blocks based on the derived filtering coefficient.

According to another aspect of the present invention, there is provided an apparatus for decoding a moving picture. The apparatus includes a memory for storing coding information of a certain block and neighboring blocks, a memory information processing unit for deriving a filtering coefficient to filter a boundary between the certain block and the neighboring blocks, and predicting a motion vector of the certain block, based on the stored information, and a filtering unit for filtering the boundary between the certain block and the neighboring blocks based on the filtering coefficient derived by the memory information processing unit.

Additional aspects and/or advantages of the invention will be set forth in part in the description which follows and, in part, will be apparent from the description, or may be learned by practice of the invention.

These and/or other aspects and advantages of the invention will become apparent and more readily appreciated from the following description of the embodiments, taken in conjunction with the accompanying drawings of which:
FIG. 1 is an exemplary diagram showing sizes of general inner memories needed to derive a boundary strength (BS);
FIG. 2 is a block diagram of a decoding apparatus according to an embodiment of the present invention;
FIG. 3A is a diagram of a block used by the memory information processing unit of FIG. 2 for predicting a motion vector of a current block and deriving BS;
FIG. 3B is a diagram showing information about the blocks of FIG. 3A; and
FIG. 4 is a flowchart of a decoding method according to another embodiment of the present invention.

Reference will now be made in detail to the embodiments of the present invention, examples of which are illustrated in the accompanying drawings, wherein like reference numerals refer to the like elements throughout. The embodiments are described below to explain the present invention by referring to the figures.

FIG. 2 is a block diagram of a decoding apparatus according to an embodiment of the present invention. Referring to FIG. 2, the decoding apparatus includes an entropy decoding unit 210, a memory 220, a memory information processing unit 230, a motion compensation unit 240, an intra prediction unit 250, and a filtering unit 260.

The entropy decoding unit 210 entropy decodes an entropy coded block. Entropy coding is a compression method based on the redundancy in blocks forming an image.

The memory 220 stores information needed to predict a motion vector and derive a boundary strength (BS) coefficient. The information stored in the memory 220 is the coding information on the blocks forming an image. The BS is a filtering coefficient used for deblocking filtering in H.264. Deblocking filtering makes boundaries between blocks less distinct in H.264.

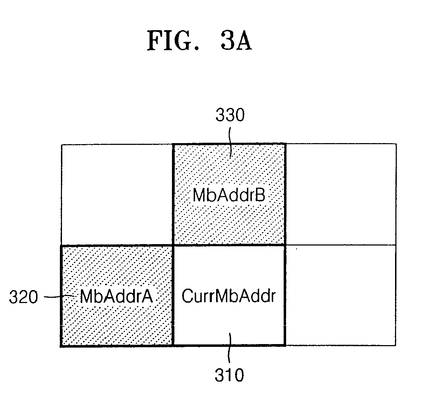

FIG. 3A is a diagram of a block used by the memory information processing unit 230 of FIG. 2 for predicting a motion vector of a current block and deriving the BS. Referring to FIGS. 2-3A, the memory information processing unit 230 predicts the motion vector of the current block and derives the BS by using the current block 310, a block 320 next (or adjacent) to the left side of the current block 310, and a block 330 next to the upper side of the current block 310.

The coding information of the current block 310, the block 320 next to the left side of the current block 310 and the block 330 next to the upper side of the current block 310 are commonly named CurrMbAddr, MbAddrA, and MbAddrB, respectively.

FIG. 3B is a diagram showing the coding information of the blocks of FIG. 3A. Referring to FIG. 3B, MbAddrA is divided into MbAddrA(Top) 340 and MbAddrA(Bottom) 350, and MbAddrB is divided into MbAddrB(Top) 360 and MbAddrB (Bottom) 370 in the MBAFF.

FIG. 3B shows the detailed contents of MbAddrA(Top) 340, MbAddrA(Bottom) 350, MbAddrB(Top) 360, MbAddrB(Bottom) 370, and CurrMbAddr 380. MbAddrA, MbAddrB, and CurrMbAddr are stored together with the coding information of other blocks in the memory 220.

The sizes of MbAddrA(Top) 340, MbAddrA(Bottom) 350, MbAddrB(Top) 360, and MbAddrB(Bottom) 370 are each 254 bits. The size of CurrMbAddr 380 is 914 bits. Thus, the size of the information needed to predict a motion vector of the current block and derive the BS is 1930 bits.

Referring to FIG. 2 again, the memory information processing unit 230 includes a motion vector prediction unit 230-1 and a BS derivation unit 230-2.

When the block decoded by the entropy decoding unit 210 is an inter predicted block, the motion vector prediction unit 230-1 predicts the motion vector of the current block using the information stored in the memory 220, and transmits the information used for predicting the motion vector to the BS derivation unit 230-2. The BS derivation unit 230-2 derives the BS using the received information.

Specifically, the motion vector prediction unit 230-1 uses MbAddrA, MbAddrB, and CurrMbAddr, which are stored in the memory 220, to predict the motion vector. Further, the BS derivation unit 230-2 uses MbAddrA, MbAddr B, and CurrMbAddr, which are stored in the memory 220, to derive the BS. That is, the motion vector prediction unit 230-1 and the BS derivation unit 230-2 share the memory 220.

The BS derivation unit 230-2 may directly receive the information needed to derive the BS from the memory 220 without the information passing through the motion vector prediction unit 230-1.

The motion vector prediction unit 230-1 and the BS derivation unit 230-2 form the memory information processing unit 230. The memory information processing unit 230 corresponds in part to a motion vector prediction unit in a conventional decoding apparatus.

That is to say, the memory information processing unit 230 not only predicts the motion vector, as the conventional motion vector prediction unit does, but also derives the BS, based on the information stored in the memory 220. Accordingly, only a small amount of routing resources are needed for data transmission between the motion vector prediction unit 230-1 and the BS derivation unit 230-2.

The motion compensation unit 240 changes the current block to a block indicated by the motion vector predicted by the memory information processing unit 230. The motion compensation unit 240 forms an image in which the motion is compensated based on the changed block.

When the block decoded by the entropy decoding unit 210 is an intra predicted block, the intra prediction unit 250 forms an image of the current block.

The filtering unit 260 filters the block image formed in the motion compensation unit 240 and the block image formed by the intra prediction unit 250. Here, the type of filtering performed is deblocking filtering. The filtering unit 260 does not additionally derive the BS. Hence, the filtering unit 260 does not need to have an additional memory or receive the information necessary for deriving the BS.

The filtering unit 260 performs filtering based on the BS received from the memory information processing unit 230. The filtering unit 260 does not receive the information needed to derive the BS but only the derived BS. According to one embodiment of the present invention, the size of the BS the memory information processing unit 230 sends to the filtering unit 260 is just 3 bits. Therefore, the amount of the routing resources needed is insignificant.

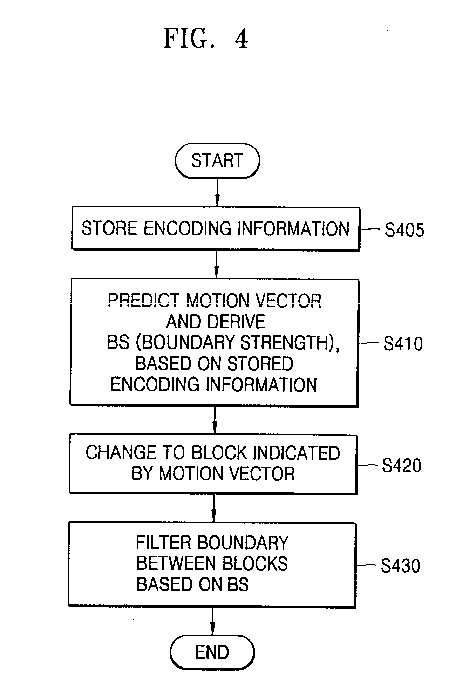

FIG. 4 is a flowchart of a decoding method according to an embodiment of the present invention.

Referring to FIG. 4, the memory 220 stores information needed to predict a motion vector and derive the BS (operation 5405). The information stored in the memory 220 is coding information on blocks forming an image.

The memory information processing unit 230 predicts a motion vector of a current block and derives the BS using the information stored in the memory 220 (operation S410). The motion vector prediction unit 230-1 and the BS derivation unit 230-2 share the memory 220. Hence, the pieces of information used for predicting the motion vector and the pieces of information used for deriving the BS are stored in one memory 220.

The motion compensation unit 240 changes the current block to the block that the predicted motion vector indicates (operation S420). The motion compensation unit 240 forms a compensated image based on the changed block.

The filtering unit 260 performs deblocking filtering on the block image formed by the motion compensation unit 240 and/or the block image formed by the intra prediction unit 250 (operation S430). The filtering unit 260 does not additionally derive the BS. The filtering unit 260 performs filtering based on the BS received from the memory information processing unit 230.

The invention has been described above with respect to the H.264 compression standard. However, the present invention is applicable not only with respect to the H.264 standard, but also when a moving picture is decoded according to another compression standard.

In another compression standard, the BS of the H.264 standard is changed to a corresponding filtering coefficient of the other compression standard. Further, the BS derivation unit 230-2 according to the H.264 standard is changed to a filtering coefficient derivation unit, and deblocking filtering according to the H. 264 standard is changed to corresponding post filtering in the other compression standard.

The invention can also be embodied as computer readable codes on a computer readable storage such as a recording medium. The computer readable storage is any data storage device that can store data which can be thereafter read by a computer system. Examples of the computer readable storage include read-only memory (ROM), random-access memory (RAM), CD-ROMs, magnetic tapes, floppy disks, optical data storage devices, and carrier waves (such as data transmission through the Internet). The computer readable storage can also be distributed over network coupled computer systems so that the computer readable code is stored and executed in a distributed fashion.

As described above, the BS derivation, which has been conventionally performed in a filtering operation, is carried out together with the prediction of the motion vector, thereby allowing the motion vector prediction unit and the BS derivation unit to share the same memory.

According to the first conventional decoding method, each of the motion vector prediction unit and the filtering unit needs an individual memory. However, according to an embodiment of the present invention, only a memory of the memory information processing unit is required, and therefore the number of memories can be reduced.

Further, since predicting of the motion vector is performed together with deriving of the BS, the memory information processing unit sends only the BS to the filtering unit.

According to the second conventional decoding method, the motion vector prediction unit sends 1930 bits necessary for deriving the BS of the current block. However, according to an embodiment of the present invention, the memory information processing unit sends BS of only 3 bits to the filtering unit. Thus, the amount of routing resources required is reduced.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A method of decoding a moving picture, comprising:
storing coding information on a certain block and neighboring blocks;
deriving a filtering coefficient to filter a boundary between the certain block and the neighboring blocks, and predicting a motion vector of the certain block based on the stored coding information; and
filtering the boundary between the certain block and the neighboring blocks based on the derived filtering coefficient.

2. The method of claim 1, wherein the neighboring blocks comprise a block next to the left side of the certain block and a block next to the upper side of the certain block.

3. The method of claim 1 or claim 2, wherein the filtering coefficient comprises a boundary strength (BS) according to an H.264 compression standard and the filtering comprises deblocking filtering according to the H. 264 compression standard.

4. A method of decoding a moving picture compressed using a plurality of macroblocks, the method comprising:
predicting a motion vector of at least one of the macroblocks using information stored in a memory; and
deriving a filtering coefficient from the information stored in the memory to filter a boundary between the macroblock and at least one neighboring macroblock.

5. The method of claim 4, further comprising:
filtering the boundary between the macroblock and the neighboring macroblock using the derived filtering coefficient.

6. The method of claim 4 or claim 5, wherein said deriving operation is performed prior to said predicting operation.

7. A method, comprising:
predicting a motion vector from image information;
deriving a filtering coefficient from the image information; and
filtering using the filtering coefficient.

8. The method of claim 7, wherein a same memory is accessed during the predicting and the deriving for the image information.

9. A method, comprising:
sharing memory contents during prediction of a motion vector and derivation of a filter coefficient; and
filtering using the filtering coefficient.

10. An apparatus for decoding a moving picture, comprising:
a memory (220) for storing coding information of a certain block and neighboring blocks;
a memory information processing unit (230) for deriving a filtering coefficient to filter a boundary between the certain block and the neighboring blocks, and for predicting a motion vector of the certain block, based on the stored coding information; and
a filtering unit (260) for filtering the boundary between the certain block and the neighboring blocks based on the filtering coefficient derived by the memory information processing unit (230).

11. The apparatus of claim 10, wherein the memory information processing unit (230) includes:
a motion vector prediction unit (230-1) for predicting a motion vector of the certain block based on the information stored in the memory (220); and
a filtering coefficient derivation unit for receiving the information stored in the memory (220) from the motion vector prediction unit (230-1) and deriving the filtering coefficient based on the received information.

12. An apparatus to decode a moving picture compressed using macroblocks, comprising:
a memory (220) for storing coding information of a certain block; and
a combination filtering and motion vector prediction unit (230-1) operable to derive a filtering coefficient and to predict a motion vector of the certain block, based on the stored coding information.

13. The apparatus of claim 12, wherein the memory (220) further stores coding information of at least one neighboring block, and wherein the filtering coefficient is used to filter a boundary between the certain block and the neighboring block.

14. An apparatus to decode a moving picture compressed using macroblocks, the apparatus comprising:
a motion vector prediction unit (230-1) operable to predict a motion vector of one of the blocks;
a filtering unit (260) operable to filter a boundary between the block and at least one neighboring block; and
a memory (220) comprising coding information of the blocks, wherein the apparatus is adapted such that
information derived from the coding information is shared among at least the motion vector prediction unit (230-1) and the filtering unit (260).

15. The apparatus of claim 14, wherein the motion vector prediction unit (230-1) and the filtering unit (260) form a memory information processing unit (230).

16. The apparatus of claim 14 or claim 15, wherein the motion vector prediction unit (230-1) derives a boundary strength from the coding information and provides the boundary strength to the filtering unit (260) to be used as a filtering coefficient.

17. A computer readable storage for controlling a computer according to a method of decoding a moving picture, the method comprising:
storing coding information on a certain block and neighboring blocks;
deriving a filtering coefficient to filter a boundary between the certain block and the neighboring blocks, and predicting a motion vector of the certain block, based on the stored coding information; and
filtering the boundary between the certain block and the neighboring blocks based on the derived filtering coefficient.
